# EUROPEAN PATENT APPLICATION

(11) **EP 2 136 560 A1**
(43) Date of publication of application: **23.12.2009**
(21) Application number: 09154723.2
(22) Date of filing: 10.03.2009
(51) Int. Cl.: H04N 7/173

(54) **System of using set-top box to obtain ad information**

(30) Priority: 18.06.2008 US 129313 P
(71) Applicant: Chung-Hsin Electric and Machinery Manufacturing Corp., Taoyuan Hsien (TW)
(72) Inventor: LU, Yi-Chuan, Taoyuan Hsien (TW); WU, Chi-Bin, Taoyuan Hsien (TW)
(74) Representative: Viering, Jentschura & Partner

(57) **Abstract**

A system of using a set-top box to obtain ad information includes a remote control, a set-top box, a program system server, and an advertising server. A first ad request corresponding to a target ad is transmitted to the set-top box via the remote control so as to obtain ad information of the target ad. A second ad request corresponding to the first ad request received is produced and transmitted to the program system server by the set-top box. A third ad request corresponding to the second ad request received is produced and transmitted to the advertising server by the program system server. The advertising server obtains a user's contact information and the ad information of the target ad according to the third ad request and transmits the ad information to the user. Hence, the user obtains the ad information of the target ad conveniently by the set-top box.

## Description

### BACKGROUND OF THE INVENTION

**1. Technical Field**

The present invention relates to a system of using a set-top box to obtain ad information and, more particularly, to an ad information system of using a set-top box to obtain ad information in real time.

**2. Description of Related Art**

Advertisements are the best marketing tool for promoting merchandise or services of all trades. Under the consideration of commercial benefits, ads are delivered in such a way that people receive ad information of various forms almost anytime and anywhere. The different forms of ad information include newspaper ads, printed flyers, radio ads, television ads, and so on.

Among the various types of ad information, newspaper ads, printed flyers, and radio ads tend to be localized, popularized only among small groups, or lacking audio and visual effects and therefore result in limited advertising effects. In contrast, television ads are more advantageous because they are ubiquitous, have a large audience, and provide rich audio and visual effects. Consequently, television ads have become the favorite advertising means for all businesses.

However, television ads are much more expensive than other types of ads. To increase cost effectiveness, it is desirable to enable consumers to directly obtain ad information of ads being viewed, such as details, purchase locations, prices, and so on of the advertised products, in a rapid, simple, and convenient way, so that it is not necessary for consumers to make extra efforts and spend additional time in searching for the ad information. Thus, not only do consumers easily obtain the ad information they need, but businesses place the ads with relatively high cost-efficiency.

### BRIEF SUMMARY OF THE INVENTION

An objective of the present invention is to provide a system of using a set-top box to obtain ad information, wherein an ad request is transmitted to the set-top box, and the set-top box works in conjunction with a program system server and an advertising server so as to provide a user end with ad information of an ad, thus allowing a user to obtain the ad information of the ad easily.

Another objective of the present invention is to provide a system of using a set-top box to obtain ad information so that implementation of the system helps save the time otherwise required for searching ad information.

Yet another objective of the present invention is to provide a system of using a set-top box to obtain ad information whereby ad information is provided directly to users to enhance advertising effects.

To achieve the aforementioned objectives, the present invention provides a system of using a set-top box to obtain ad information, wherein the system comprises: a remote control for transmitting a first ad request corresponding to a target ad; the set-top box provided with a first application module for receiving the first ad request so as to produce a second ad request accordingly and transmit the second ad request; a program system server provided with a second application module for receiving the second ad request so as to produce a third ad request accordingly and transmit the third ad request; and an advertising server for receiving the third ad request, obtaining ad information of the target ad according to the third ad request, and providing the ad information to a user end.

Implementation of the present invention at least involves the following inventive steps:

1. Ad information of an ad is easily obtained and then provided to a user end, allowing a user to directly obtain the ad information related to the ad.

2. The time and efforts required for searching the ad information are saved.

3. The ad information is provided directly to the user to improve advertising effects.

A detailed description of features and advantages of the present invention is given below so that a person skilled in the art is enabled to understand and implement the technical contents of the present invention and readily comprehend the objectives and advantages thereof by reviewing the teachings disclosed herein, the appended claims, and the accompanying drawings.

### BRIEF DESCRIPTION OF THE SEVERAL VIEWS OF THE DRAWINGS

The invention as well as a preferred mode of use, further objectives, and advantages thereof will be best understood by referring to the following detailed description of an illustrative embodiment in conjunction with the accompanying drawings, wherein:

FIG. 1 is a schematic drawing of a system of using a set-top box to obtain ad information according to the present invention;

FIG. 2 is a first delivery time sequence diagram of programs and ads of multiple channels according to the present invention;

FIG. 3A is a block diagram of a system of using a set-top box to obtain a display signal according to the present invention;

FIG. 3B is a block diagram of the system of using the set-top box to obtain ad information according to the present invention;

FIG. 4 shows a packet structure of a second ad request according to the present invention;

FIG. 5 shows a packet structure of a third ad request according to the present invention;

FIG. 6 shows an ad information table according to the present invention;

FIG. 7 shows a user data table according to the present invention;

FIG. 8 is a second delivery time sequence diagram of programs and ads of multiple channels according to the present invention;

FIG. 9 is a third delivery time sequence diagram of programs and ads of multiple channels according to the present invention;

FIG. 10 shows a screen image of a display device according to the present invention; and

FIG. 11 is another block diagram of the system of using the set-top box to obtain ad information according to the present invention, showing an application thereof.

### DETAILED DESCRIPTION OF THE INVENTION

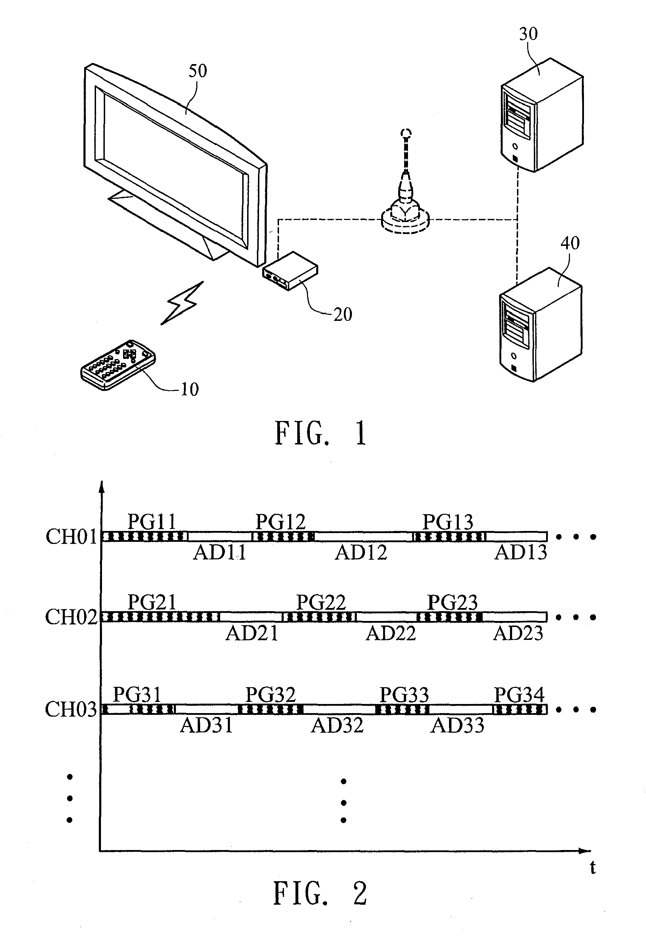

Referring to FIG. 1, a system of using a set-top box to obtain ad information according to an embodiment of the present invention includes a remote control 10, a set-top box 20, a program system server 30, and an advertising server 40.

Referring to FIG. 2, the program system server 30 is configured to provide a plurality of channels (CH01, CH02, CH03...) each including a plurality of programs and a plurality of ads, wherein the programs and the ads are delivered alternately and sequentially. In addition, each program has a program index code PGy (PG11, PG12, PG13, PG21, PG22, PG23...) while each ad has an ad index code ADx (AD11, AD12, AD 13, AD21, AD22, AD23...).

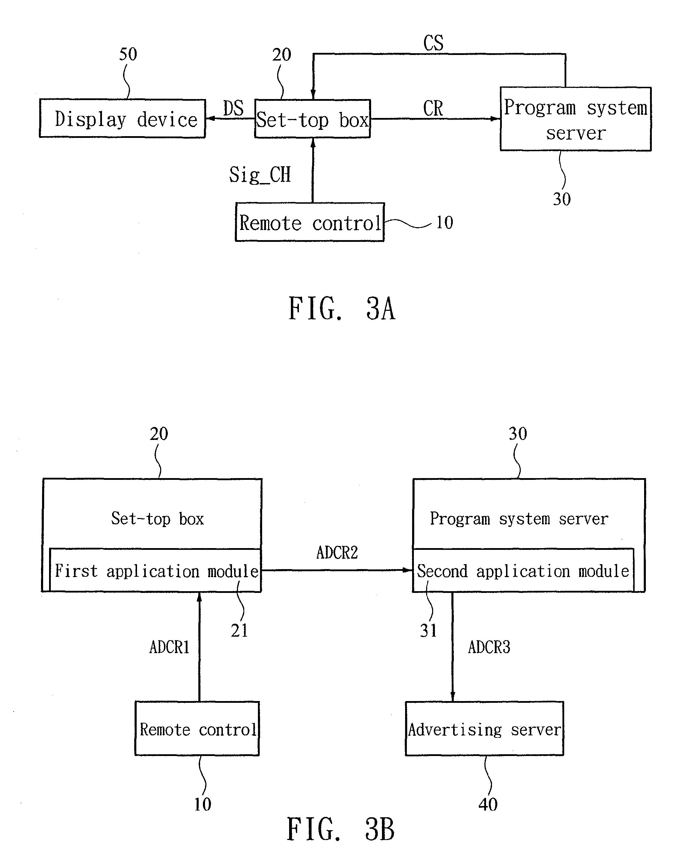

As shown in FIG. 1, the remote control 10 is configured to transmit a control signal to the set-top box 20. Referring to FIG. 3A, a user sends a channel selection signal Sig_CH to the set-top box 20 so as to select from the plurality of channels a target channel to be viewed. Referring to FIG. 3B, upon discovering an ad of interest (i.e., a target ad) in contents of the target channel, the user uses the remote control 10 to transmit a first ad request ADCR1 corresponding to the target ad to the set-top box 20.

As shown in FIG. 3A, the set-top box 20 is configured to receive the channel selection signal Sig_CH transmitted by the remote control 10 and transmit a channel request CR to the program system server 30. After receiving the channel request CR, the program system server 30 transmits a channel signal CS corresponding to the target channel to the set-top box 20. The set-top box 20 then decodes the received channel signal CS into a display signal DS. Since each set-top box 20 has a username index code IDm, the program system server 30 can identify the source of the channel request CR by the username index code IDm and transmit the channel signal CS to the set-top box 20 that transmitted the channel request CR.

Referring back to FIG. 1, the system in the present embodiment further comprises a display device 50, which is a television screen, for example. As shown in FIG. 3A, the display device 50 is in electrical signal communication with the set-top box 20 and is configured to receive the display signal DS and display programs and ads of the target channel according to the display signal DS for the user to view.

As shown in FIG. 3B, the set-top box 20 is provided with a first application module 21 for receiving the first ad request ADCR1 transmitted by the remote control 10. In addition, the first application module 21 produces a second ad request ADCR2 according and corresponding to the first ad request ADCR1 and transmits the second ad request ADCR2.

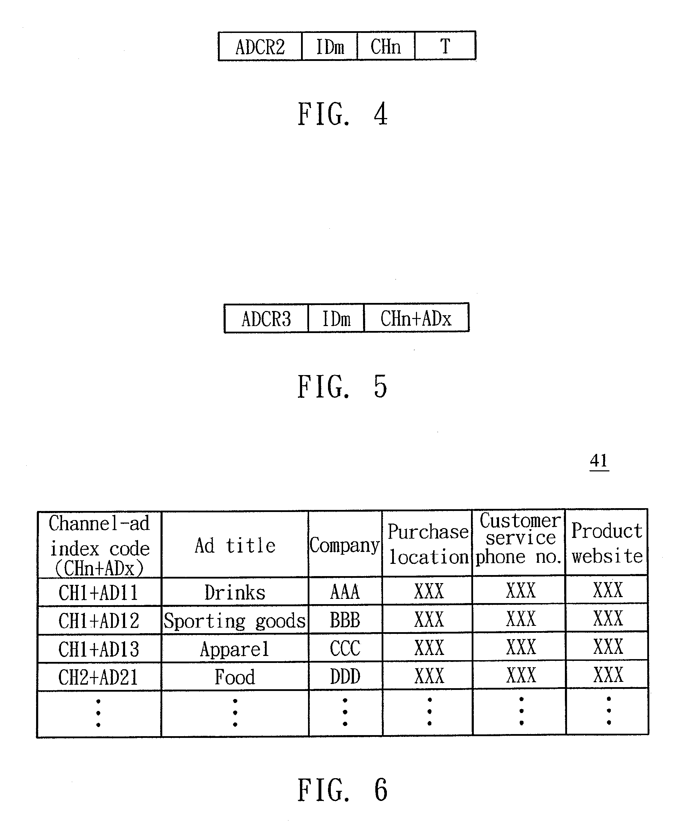

The first application module 21 of the set-top box 20 produces the second ad request ADCR2 according to the username index code IDm of the set-top box 20, a channel index code CHn corresponding to the target channel, and a sending time code T according to the time point at which the user sends the first ad request ADCR1. Hence, the second ad request ADCR2 has a packet structure shown in FIG. 4. In other words, the second ad request ADCR2 at least includes the username index code IDm, the channel index code CHn, and the sending time code T.

As shown in FIG. 3B, the program system server 30 is provided with a second application module 31 for receiving the second ad request ADCR2 transmitted by the set-top box 20. Also, the second application module 31 produces a third ad request ADCR3 according and corresponding to the second ad request ADCR2 and transmits the third ad request ADCR3.

The second application module 31 of the program system server 30 identifies the target channel viewed by the user according to the channel index code CHn in the second ad request ADCR2 and, by relating the sending time code T to a program table of the target channel, identifies the target ad requested by the user. As the target ad on the target channel corresponds to an ad index code ADx, the second application module 31 uses the channel index code CHn and the sending time code T in the second ad request ADCR2 to produce a channel-ad index code CHn+ADx accordingly. The third ad request ADCR3 has a packet structure shown in FIG. 5, in which the third ad request ADCR3 at least includes the username index code IDm and the channel-ad index code CHn+ADx.

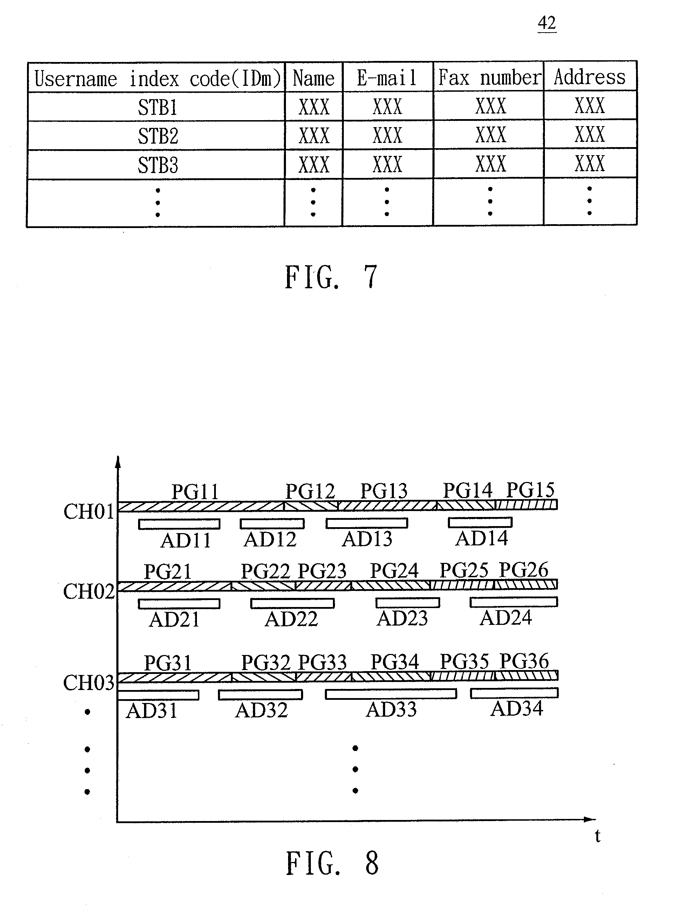

The advertising server 40 is configured to store an ad information table 41 and a user data table 42, as shown respectively in FIGs. 6 and 7.

The ad information table 41 stored in the advertising server 40 is shown in FIG. 6 as containing the ad information of ads delivered in each channel at different times. Since each ad corresponds to an aforesaid channel-ad index code CHn+ADx, each channel-ad index code CHn+ADx can be related to the ad information of each ad, such as an ad title, a company name, a purchase location, a product website, and so forth. Therefore, by relating the channel-ad index code CHn+ADx of the target ad in the third ad request ADCR3 to the ad information table 41, the ad information of the target ad is obtained.

As shown in FIG. 7, the user data table 42 stored in the advertising server 40 contains contact information of each user end, such as a user's name, e-mail address, phone number, fax number, address, and so on. The contact information of each user end corresponds to an aforesaid username index code IDm (STB1, STB2, STB3...). Thus, the contact information of a user end is easily found using the username index code IDm so as to enable provision of the ad information to the user end.

Referring to FIGs. 3B, 6, and 7, the advertising server 40 is configured to receive the third ad request ADCR3 transmitted by the program system server 30. In addition, the advertising server 40 relates the channel-ad index code CHn+ADx in the third ad request ADCR3 to the ad information table 41 so as to obtain the ad information of the target ad. The advertising server 40 also relates the username index code IDm in the third ad request ADCR3 to the user data table 42 so as to obtain the contact information of the user end.

Based on the contact information obtained, the advertising server 40 transmits the ad information of the target ad to the user end. For example, the ad information is transmitted to the user end by e-mail, fax, ordinary mail, and so on. Besides, the advertising server 40 further integrates a record of the ad information requested by the user into an ad information server website. Thus, the user can obtain the ad information of all target ads conveniently by logging on to the ad information server website and clicking on the product website of each ad information in the record, which directly links the user to the product website corresponding to each target ad.

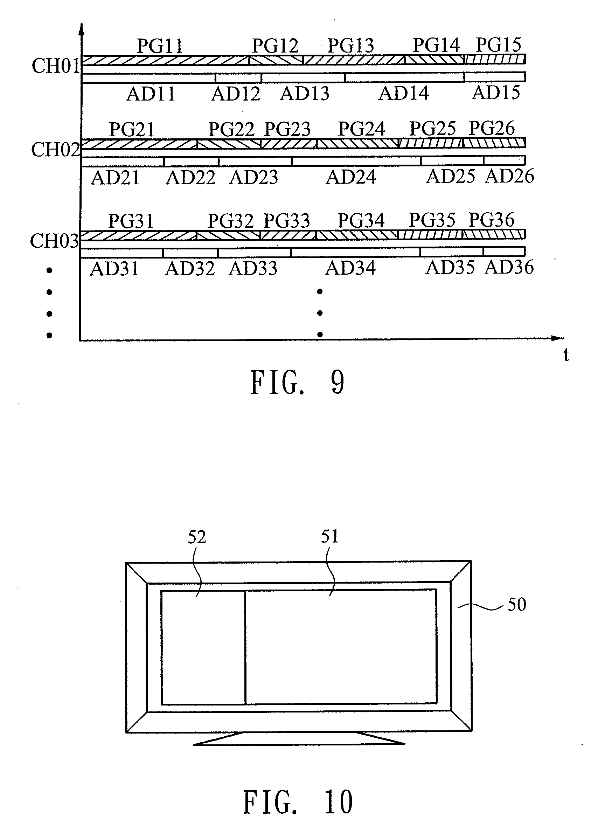

Furthermore, referring to FIGs. 8 and 9, the channels (CH01, CH02, CH03...) provided by the program system server 30 may only include a plurality of programs while the advertising server 40 provides a plurality of ads, wherein the target ad is one of the ads provided by the advertising server 40. In this case, the set-top box 20 receives the programs from the program system server 30 and the ads from the advertising server 40, respectively. After decoding the channel signal CS of the target channel and signals of the ads, the set-top box 20 transmits the decoded signals to the display device 50 for display. The ads provided by the advertising server 40 can be delivered at intervals, as shown in FIG. 8, or continuously, as shown in FIG. 9.

Referring to FIG. 10, the display device 50 may use a picture-in-picture display technique whereby the programs are displayed in a program window 51 while the ads are displayed concurrently in an ad window 52, thus allowing the user to view the programs and the ads at the same time. Similarly, when the user finds out a target ad in the contents of the target channel, he or she can use the remote control 10 to select the target ad and transmit the first ad request ADCR1 corresponding to the target ad to the first application module 21 of the set-top box 20, thereby easily obtaining the ad information of the target ad through the system of the present embodiment.

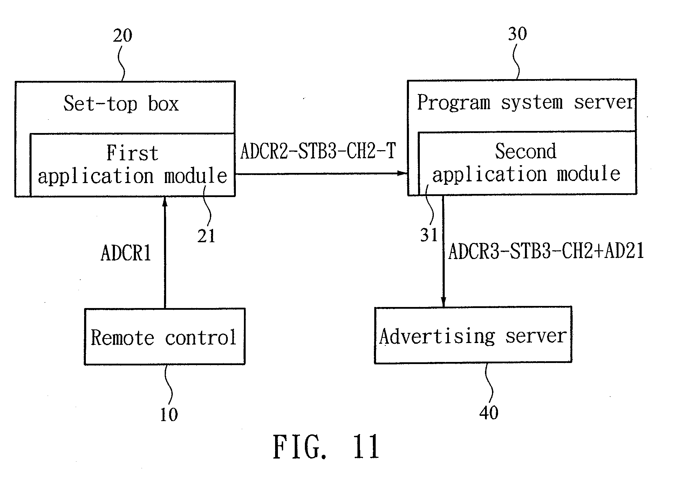

An operation example of the disclosed system is given below by reference to FIG. 11 to further demonstrate the present embodiment. When a user of the set-top box 20 having a username index code IDm of STB3 finds out a target ad on Channel 2 (CH2), he or she can use the remote control 10 to select the target ad and also use the remote control 10 to transmit the first ad request ADCR1 to the first application module 21 of the set-top box 20.

After the set-top box 20 receives the first ad request ADCR1, the first application module 21 of the set-top box 20 produces the corresponding second ad request ADCR2 according to the username index code IDm (STB3) of the set-top box 20, the channel index code CHn (CH2) of Channel 2, and the sending time code T of the time point at which the user sent the first ad request ADCR1, and then transmits the second ad request ADCR2 to the program system server 30. In the present operation example, the second ad request ADCR2 has a packet structure of ADCR2-STB3-CH2-T.

The second application module 31 of the program system server 30 receives the second ad request ADCR2 transmitted by the set-top box 20 and identifies the channel viewed by the user as Channel 2 according to the channel index code CHn (CH2) in the second ad request ADCR2. In addition, by relating the sending time code T to the program table of Channel 2, the second application module 31 identifies the ad whose ad information is requested by the user so as to produce the channel-ad index code CHn+ADx, such as CH2+AD21.

Meanwhile, the second application module 31 combines the channel-ad index code CHn+ADx with the username index code IDm to produce the third ad request ADCR3 and transmits the third ad request ADCR3 to the advertising server 40. Thus, the third ad request ADCR3 has a packet structure of ADCR3-STB3-CH2+AD21.

After receiving the third ad request ADCR3, the advertising server 40 relates the channel-ad index code CHn+ADx in the third ad request ADCR3 to the ad information table 41 (FIG. 6) so as to obtain the ad information corresponding to the channel-ad index code CHn+ADx, i.e., CH2+AD21.

On the other hand, the advertising server 40 relates the username index code IDm in the third ad request ADCR3 to the user data table 42 (FIG. 7) so as to obtain the contact information corresponding to the username index code IDm, i.e., STB3, and transmit the ad information to the user end accordingly. Thus, by using the system of the present embodiment, the user saves the time otherwise required to search for ad information and easily obtains the ad information of the target ad.

The present invention has been described by reference to the preferred embodiment thereof to enable a person skilled in the art to understand and carry out the content of the present invention. It is understood that the embodiment is not intended to limit the scope of the present invention. Therefore, all equivalent changes or modifications which do not depart from the spirit of the present invention should be encompassed by the appended claims.

## Claims

1. A system of using a set-top box to obtain ad information, comprising:
a remote control for transmitting a first ad request corresponding to a target ad;
the set-top box provided with a first application module for receiving the first
ad request so as to produce a second ad request accordingly and transmit the
second ad request;
a program system server provided with a second application module for receiving the second ad request so as to produce a third ad request
accordingly and transmit the third ad request; and
an advertising server for receiving the third ad request, obtaining ad information of the target ad according to the third ad request, and providing the ad information to a user end.

2. The system of using the set-top box to obtain the ad information as claimed in Claim 1, wherein the target ad is one of a plurality of ads provided by the program system server, and the program system server provides a plurality of channels, each said channel comprising a plurality of programs and the plurality of ads.

3. The system of using the set-top box to obtain the ad information as claimed in Claim 2, wherein the programs and the ads are delivered alternately and sequentially.

4. The system of using the set-top box to obtain the ad information as claimed in Claim 2, wherein each said program has a program index code, and each said ad has an ad index code.

5. The system of using the set-top box to obtain the ad information as claimed in Claim 1, wherein the remote control instructs the set-top box to transmit a channel request corresponding to a target channel to the program system server, and the program system server transmits a channel signal of the target channel to the set-top box so that the set-top box decodes the channel signal into a display signal.

6. The system of using the set-top box to obtain the ad information as claimed in Claim 5, further comprising a display device for displaying a plurality of programs and a plurality of ads of the target channel according to the display signal.

7. The system of using the set-top box to obtain the ad information as claimed in Claim 1, wherein the second ad request at least comprises a username index code, a channel index code, and a sending time code.

8. The system of using the set-top box to obtain the ad information as claimed in Claim 7, wherein the second application module relates the channel index code to a target channel of a plurality of channels and relates the sending time code to a program table of the target channel so as to produce the third ad request.

9. The system of using the set-top box to obtain the ad information as claimed in Claim 1, wherein the third ad request at least comprises a username index code and a channel-ad index code.

10. The system of using the set-top box to obtain the ad information as claimed in Claim 1, wherein the advertising server stores an ad information table and a user data table.

11. The system of using the set-top box to obtain the ad information as claimed in Claim 10, wherein the ad information table contains the ad information of each ad delivered in each channel, and each said ad corresponds to a channel-ad index code.

12. The system of using the set-top box to obtain the ad information as claimed in Claim 10, wherein the advertising server relates a channel-ad index code in the third ad request to the ad information table so as to obtain the ad information.

13. The system of using the set-top box to obtain the ad information as claimed in Claim 10, wherein the user data table contains contact information of each said user end, and each said contact information corresponds to a username index code.

14. The system of using the set-top box to obtain the ad information as claimed in Claim 10, wherein the advertising server relates a username index code in the third ad request to the user data table so as to obtain contact information of the user end.

15. The system of using the set-top box to obtain the ad information as claimed in Claim 1, wherein the advertising server further integrates a record of the ad information into an ad information server website.

16. The system of using the set-top box to obtain the ad information as claimed in Claim 1, wherein the program system server provides a plurality of channels, each said channel comprising a plurality of programs, and the target ad is one of a plurality of ads provided by the advertising server.

17. The system of using the set-top box to obtain the ad information as claimed in Claim 16, wherein each said program has a program index code, and each said ad has an ad index code.
